(19) Europäisches Patentamt
European Patent Office
Office européen des brevets

(11) Numéro de publication: **0 096 612**
**B1**

(12)
# FASCICULE DE BREVET EUROPEEN

(45) Date de publication du fascicule du brevet: **28.01.87**

(51) Int. Cl.⁴: **G 02 F 1/17**, H 01 M 4/60, H 01 B 1/12

(21) Numéro de dépôt: **83401026.6**

(22) Date de dépôt: **24.05.83**

(54) **Electrode comprenant un film de polymère électrochrome pouvant servir dans un dispositif d'affichage ou de stockage d'énergie.**

(30) Priorité: **01.06.82 FR 8209512**

(43) Date de publication de la demande: **21.12.83 Bulletin 83/51**

(45) Mention de la délivrance du brevet: **28.01.87 Bulletin 87/5**

(84) Etats contractants désignés: **DE GB IT NL**

(56) Documents cités:
**EP - A - 0 027 855**
**EP - A - 0 036 118**
**WO - A - 83/02368**
**FR - E - 94 536**
**EXTENDED ABSTRACTS, vol. 80-1, 11-16 mai 1980, pages 1061-1062, no. 427, Spring Meeting, Princeton, New Jersey, US, A.F. DIAZ et al.: "Electrosynthesis and study of conducting organic polymers for electrode applications"**
**IBM TECHNICAL DISCLOSURE BULLETIN, vol. 24, no. 11A, avril 1982, page 5755, New York, US, A.F. DIAZ et al.: "Poly-p-nitrophenylpyrrole films as electrodes for batteries"**
**CHEMICAL ABSTRACTS, vol. 93, no. 6, 1980, page 664, no. 56812d, Columbus, Ohio, US, A.F. DIAZ et al.:**

(73) Titulaire: **THOMSON-CSF, 173, Boulevard Haussmann, F-75379 Paris Cedex 08 (FR)**

(72) Inventeur: **Gazard, Maryse, THOMSON-CSF SCPI 173, bld Haussmann, F-75379 Paris Cedex 08 (FR)**
Inventeur: **Tourillon, Gérard, THOMSON-CSF SCPI 173, bld Haussmann, F-75379 Paris Cedex 08 (FR)**
Inventeur: **Garnier, Francis, THOMSON-CSF SCPI 173, bld Haussmann, F-75379 Paris Cedex 08 (FR)**

(74) Mandataire: **Lepercque, Jean et al, THOMSON-CSF SCPI 19, avenue de Messine, F-75008 Paris (FR)**

(56) Documents cités: (suite)
**"Chemical modification of a polypyrrole electrode surface"**
**JAPANESE JOURNAL OF APPLIED PHYSICS, vol. 21, no. 9, Part 2, septembre 1982, pages 567-568, Tokyo, JP, KEIICHI KANETO et al.: "Electrical properties of conducting polymer, poly-thiophene, prepared by electrochemical polymerization"**
**JOURNAL OF POLYMER SCIENCE, vol. 18, no. 1, janvier 1980, pages 9-12, John Wiley & Sons Inc., TAKAKAZU YAMAMOTO et al.: "Preparation of thermostable and electric-conducting poly(2,5-thienylene)"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

L'invention concerne une électrode couverte d'un nouveau polymère électroactif obtenu par oxydation électrochimique d'un monomère et son application aux cellules électrochimiques et notamment aux systèmes d'affichage électrochromiques.

Des électrodes recouvertes d'un film de polymère ont déjà été réalisées, notamment pour la fabrication de cellules électrochromiques. Les électrochromes polymères organiques présentent un grand intérêt parce qu'ils sont plus faciles à mettre en œuvre que les autres types d'électrochromes. D'autre part, en modifiant la structure chimique du polymère on peut modifier les spectres d'absorption des molécules oxydées et réduites. Des polymères électrochromes dans lesquels le groupement électrochrome a été fixé par une réaction chimique sur la chaîne d'un polymère ont déjà été décrits. Les polymères solubles dans les solvants organiques peuvent être facilement déposés sur une électrode par des méthodes classiques (par centrifugation ou au trempé). Suivant la nature des groupements électrochromes, des temps de réponse de l'ordre de 100 ms peuvent être obtenus dans des systèmes d'affichage utilisant ces matériaux mais leur adhérence sur l'électrode est souvent limitée.

Un autre procédé utilisé pour déposer des films minces de polymère sur une électrode consiste à polymériser électrochimiquement le monomère souhaité. Il est connu de déposer par oxydation anodique du pyrrole et des pyrroles N-substitués sur des électrodes de platine ou de verre recouvertes d'un oxyde conducteur. Dans des systèmes d'affichage électrochromique tel que celui décrit dans la demande de brevet européen EP-A-0 027 855, ces films peuvent subir des cycles d'oxydation et de réduction avec modification des spectres optiques. Si les électrodes recouvertes de tels polymères sont intéressantes du fait de la meilleure adhérence du film mince électrochrome, les matériaux ont l'inconvénient de présenter une grande sensibilité à l'oxygène ce qui favorise leur dégradation et diminue leur durée de vie.

L'invention due, d'une part à MM. F. GARNIER et G. TOURILLON du Laboratoire de Photochimie Solaire du C.N.R.S. et à Mlle GAZARD de THOMSON-CSF propose de pallier ces inconvénients en réalisant une électrode recouverte d'un polymère obtenu par polymérisation électrochimique d'un monomère qui appartient à une famille permettant d'obtenir un produit ayant des performances améliorées: temps de réponse réduit, grande stabilité des matériaux et durée de vie améliorée. Dans le cas de l'utilisation de cette électrode dans un dispositif d'affichage électrochromique, la couleur caractérisant l'affichage est fonction de la structure du monomère et de la nature du contre-ion.

L'invention a donc pour objet une électrode comprenant un support conducteur recouvert d'un film de polymère obtenu par polymérisation électrochimique d'au moins un monomère M, ledit polymère répondant à la formule générale $(M^+X\bar{y})n$; $X^-$ représentant un anion provenant de l'électrolyte utilisé au cours de ladite polymérisation, y la proportion en anion rapportée à une mole de monomère et n le degré de polymérisation; caractérisée en ce que ledit monomère possède au moins un hétérocycle aromatique à 5 chaînons, contenant un seul hétéro-atome et qu'il est substitué par au moins un groupement de type alkyle, alkoxyle, hydroxyle, aryle, aryle substitué, halogène trihalogénométhyle, cyano, amino ou dialkylamino, ledit monomère étant:

– soit:

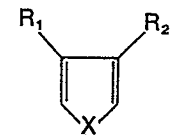

avec

X = S ou O,

$R_1$ et $R_2$ étant soit l'hydrogène, soit l'un desdits groupements,

– soit un indole substitué sur le noyau phényle par au moins l'un des groupements $R_3$, $R_4$, $R_5$ et $R_6$, de formule générale:

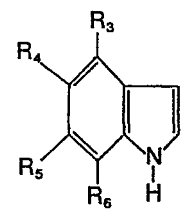

$R_3$, $R_4$, $R_5$ et $R_6$ étant soit l'hydrogène, soit l'un desdits groupements.

L'invention a aussi pour objet d'utiliser une telle électrode dans des cellules électrochimiques.

L'invention a encore pour objet de disposer d'une telle électrode pour réaliser un dispositif d'affichage électrochromique.

L'invention sera mieux comprise au moyen de la description qui va suivre et des figures annexées parmi lesquelles:

– la figure 1 est une vue en coupe d'une cellule électrochromique,

– la figure 2 est un diagramme D = f(λ) représentant la densité optique en fonction de la longueur d'onde pour un cycle d'oxydo-réduction du poly méthyl-3-thiophène associé à l'anion $ClO_4^-$,

– la figure 3 est un diagramme D = f(λ) du poly méthyl-3-thiophène associé à l'anion $PF_6^-$,

– la figure 4 est un diagramme D = f(λ) du poly méthyl-3-thiophène associé à l'anion $BF_4^-$,

– la figure 5 est un diagramme D = f(λ) du poly 5-cyanoindole associé à l'anion $ClO_4^-$.

On décrit d'abord le mode préparatoire du dépôt d'un film de polymère sur un élément conducteur puis des exemples seront donnés afin de décrire quelques réalisations.

Les monomères utilisés pour réaliser le film de polymère possèdent au moins un hétérocycle aromatique à 5 chaînons contenant un seul hétéroatome. Le monomère peut être un dérivé substitué en position 3, en position 4 ou en position 3 et 4 du thiophène ou du furanne. Ce peut être un indole

substitué sur le noyau phényle par 1 à 4 groupements.

La polymérisation du monomère est effectuée dans une cellule d'électrolyse contenant le monomère dissous dans un solvant organique tel que l'acétonitrile, le tétrahydrofuranne, le chlorure de méthylène ou un mélange eau-acétonitrile, en présence d'un seul conducteur de formule $A^+X^-$. Le cation $A^+$ peut être un élément alcalin, l'ion $N(C_4H_9)_4{}^+$, l'ion $N(C_2H_5)_4{}^+$ ou un composé analogue. L'anion $X^-$ peut être un ion du type

$ClO_4{}^-$, $BF_4{}^-$, $PF_6{}^-$, $I^-$, $BR^-$, 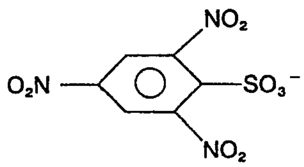

ou un composé analogue. La concentration en monomère est comprise entre $5 \cdot 10^{-3}$ et $10^{-1}$ mole/litre et celle en sel conducteur est comprise entre $10^{-2}$ et 1 mole/litre. Le polymère se dépose sur l'anode sous la forme d'un film adhérent à une vitesse qui dépend de la concentration en monomère dans le solvant, du potentiel de l'anode et du courant entre l'anode et la cathode. On peut soit fixer le potentiel de l'anode par rapport à une électrode de référence, soit imposer une différence de potentiel entre l'anode et la cathode.

Le film de polymère se dépose sur une électrode constituée par une plaque métallique qui peut être par exemple en platine ou en or, ou par une lame de verre sur laquelle a été déposé un film conducteur transparent tel que l'oxyde d'étain ou d'indium. La cathode ou contre-électrode peut être un fil de platine ou d'or et l'électrode de référence une électrode standard au calomel.

Le film de polymère qui se forme à la surface de l'anode contient une certaine proportion de l'anion provenant de l'électrolyte et on peut écrire sa formule générale sous la forme $(M^+X\bar{y})n$ où M représente le monomère, $X^-$ l'anion ou contre-ion, y la proportion en anion dans le polymère rapportée à une mole de monomère et n le degré de polymérisation. Dans la formule ci-dessus, y est un facteur qui peut varier entre 0,1 et 0,5. Il n'est pas possible de déterminer la valeur du coefficient n à cause de l'insolubilité du polymère. Le polymère et l'anion forment un complexe à transfert de charges dont la conductivité varie entre $10^{-2}$ et $100\,\Omega^{-1} \cdot cm^{-1}$.

Un tel polymère recouvrant une électrode peut subir, dans une cellule électrochimique, des cycles d'oxydo-réduction accompagnés d'une modification du spectre d'absorption de la lumière. Les cycles d'oxydo-réduction provoquent des phénomènes d'insertion et de désinsertion des contre-ions à l'intérieur du polymère qui modifient le spectre d'absorption de la lumière. Il est particulièrement avantageux d'utiliser une électrode selon l'invention dans une cellule électrochimique comprenant au moins deux électrodes, l'électrode de travail et une contre-électrode, afin de réaliser un dispositif d'affichage électrochromique. C'est ce que représente la figure 1 qui est une vue en coupe d'une cellule électrochromique. La cellule se compose d'une cuve 1 transparente, en verre par exemple, fermée par un couvercle 2. L'électrode 3, qui est l'électrode de travail, est recouverte d'un film 4 de polymère électrochrome selon l'invention. Ce film est déposé sur l'électrode 3 suivant le procédé décrit précédemment et son épaisseur est comprise entre 0,1 et 0,5 micron. La contre-électrode 5 peut être simplement un fil de platine. Il est possible de munir le système d'une électrode de référence 6 qui peut être une électrode standard au calomel. La cellule est remplie d'une solution d'électrolyte dans un solvant organique 7, par exemple du type qui a servi à élaborer le film de polymère. L'électrolyte est un sel conducteur du type $A^+X^-$ déjà décrit dont la concentration dans la solution est comprise entre $10^{-2}$ et 1 mole/litre. Les électrodes 3, 5 et 6 sont réunies à un générateur de tension 8. En faisant varier le potentiel de l'électrode de travail par rapport à l'électrode de référence, au moyen du générateur 8, on provoque une modification de la couleur du film de polymère. La variation de la différence de potentiel entre les électrodes 3 et 6 provoquée par le générateur 8 dépend de la nature du polymère mais ne sort généralement pas de la gamme [−1,5 V, +1,5 V]. La quantité de charges nécessaire pour oxyder ou pour réduire le polymère est fonction de l'épaisseur du film 4. Elle est comprise entre 1 et 50 mC/cm². Le générateur 8 permet, par l'intermédiaire des électrodes 3 et 5, le passage du courant d'électrolyse à travers la solution 7.

Chaque polymère $(M^+X\bar{y})n$ possède un spectre d'absorption pour la forme réduite et un spectre d'absorption pour la forme oxydée. Il est donc possible d'obtenir des dispositifs d'affichage polychromatiques soit en modifiant pour un même monomère M la nature du contre-ion $X^-$ (en changeant la nature de l'électrolyte), soit en modifiant la structure du monomère M. Il est possible d'obtenir par les mêmes méthodes des films de polymère formé à partir de 2 ou de plusieurs monomères de base.

Une cellule électrochromique telle que celle représentée à la figure 1 peut fonctionner en réflexion ou en transmission. Dans le cas d'un fonctionnement en réflexion, l'électrode 3 peut être métallique, par exemple en platine. Pour un fonctionnement en transmission, on peut employer une lame de verre sur laquelle a été déposé un film conducteur transparent tel que l'oxyde d'étain ou l'oxyde d'indium. L'électrode de référence est placée de façon à ne pas perturber l'observation de la cellule.

Des exemples de réalisation sont donnés ci-après.

Exemple 1

Cet exemple décrit la fabrication type d'un polymère électrochrome où le monomère est le méthyl-3-thiophène.

Une cellule d'électrolyse comprenant 3 électrodes: l'anode, la cathode, et une électrode de référence, est remplie d'une solution contenant $10^{-2}$ moles de méthyl-3-thiophène et 0,1 mole de perchlorate de lithium pour un litre d'acétonitrile. L'anode est par exemple une lame de verre sur laquelle a été déposé un film conducteur tel que l'oxyde d'étain $SnO_2$ sur une surface de 1 $cm^2$. La cathode se présente sous la forme d'un fil de platine. La solution est parfaitement désoxygénée par balayage d'argon sec pendant au moins une demi-heure.

Le potentiel de l'anode est fixé à 1,4 V par rapport à l'électrode de référence. En établissant une différence de potentiel entre l'anode et la cathode, on provoque l'électrolyse de la solution et l'anode se recouvre alors d'un film de polymère de couleur bleu foncé et dont l'épaisseur peut atteindre 4000 Å au bout d'une minute. Le polymère obtenu par cette méthode est le poly méthyl-3-thiophène qui peut être représenté par la formule suivante, déterminée par micro-analyse:

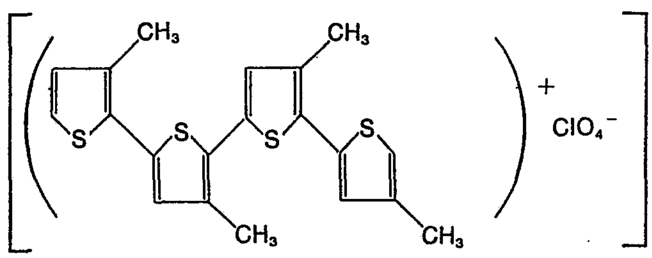

Ce polymère est stable à l'air et sous vide jusqu'à des températures supérieures à 300 °C. Sa conductivité est comprise entre 10 et $100^{-1} \cdot cm^{-1}$.

L'électrode recouverte de son film de polymère est rincée dans l'acétonitrile puis placée dans une autre cellule du type représenté à la figure 1. Cette cellule est remplie d'une solution contenant 0,1 mole de perchlorate de lithium par litre d'acétonitrile. Le film est réduit puis réoxydé si l'on applique entre l'électrode de travail (constituée par l'électrode recouverte du film de polymère) et l'électrode de référence une tension d'abord nulle puis égale à 0,8 V. La couleur du film passe alors du bleu foncé caractéristique du polymère oxydé au rouge caractéristique du polymère réduit. La quantité de charges nécessaire pour réduire le film qui occupe une surface de 1 $cm^2$ est de 5,9 mC et celle nécessaire à l'oxyder 6 mC. Lorsque des impulsions de tension sont appliquées pour modifier le spectre optique, les temps de réponse sont inférieurs à 100 ms. Le nombre de cycles d'oxydo-réduction que l'on peut effectuer est supérieur à $10^4$.

La figure 2 représente les spectres d'absorption pour le polymère lors d'un cycle d'oxydo-réduction. C'est un diagramme qui représente l'allure de la densité optique D en fonction de la longueur d'onde $\lambda$ de la lumière. La courbe 10 se rapporte au polymère réduit qui est donc de couleur rouge. La courbe 11 se rapporte au polymère oxydé qui est bleu foncé. On constate que la courbe 10 présente un maximum pour $\lambda = 510$ nm et qu'elle décroît de façon sensiblement symétrique de part et d'autre de cette longueur d'onde. La courbe 11 présente un maximum pour $\lambda > 650$ nm environ et décroît avec la longueur d'onde. D'après la figure 2, on peut noter que pour $\lambda = 510$ nm la différence de densité optique $\Delta D$ entre les courbes 10 et 11 est $\Delta D = 0,55$ et que pour $\lambda > 650$ nm $\Delta D = 0,2$.

Exemple 2

Cet exemple décrit la modification de couleur obtenue lorsqu'on change la nature du contre-ion $X^-$ dans l'élaboration du polymère à partir du monomère de l'exemple 1.

Les produits mis en œuvre pour l'obtention du film de polymère sont les mêmes que précédemment excepté pour l'électrolyte qui est remplacé soit par l'hexafluorophosphate de tétrabutylammonium $N(Bu)_4{}^+PF_6{}^-$ soit par le tétrafluoroborate de tétrabutylammonium $N(Bu)_4{}^+BF^-{}_4$ en concentration identique. Dans les mêmes conditions d'électrolyse que précédemment, on obtient un film de 1500 Å d'épaisseur.

L'électrode recouverte de son film de polymère est rincée dans l'acétonitrile puis placée dans une autre cellule du type représenté à la figure 1. Cette cellule est remplie d'une solution contenant le même électrolyte qui a servi à élaborer le film de polymère afin de conserver les propriétés optiques du film au cours de cycles d'oxydo-réduction. La solution contiendra donc 0,1 mole d'hexafluorophosphate de tétrabutylammonium ou de tétrafluoroborate de tétrabutylammonium pour 1 l d'acétonitrile. Le film est réduit puis réoxydé si l'on applique entre l'électrode de travail et l'électrode de référence une tension d'abord nulle puis égale à 1 V.

Les spectres d'absorption des formes oxydées et réduites et les quantités de charges mises en jeu sont:

a) pour $X^- = PF_6{}^-$, bleu-violet pour la forme oxydée (quantité de charges lors de l'oxydation 6 mC/$cm^2$) et orange pour la forme réduite (quantité de charges lors de la réduction 5,9 mC/$cm^2$),

b) pour $X^- = BF_4{}^-$, bleu-vert pour la forme oxydée (5,5 mC/$cm^2$) et rouge orangé (5,4 mC/$cm^2$) pour la formule réduite.

La figure 3 représente les spectres d'absorption pour le polymère de l'exemple 2 avec $X^- = PF_6{}^-$.

C'est un diagramme qui représente l'allure de la densité optique D en fonction de la longueur d'onde λ de la lumière. La courbe 12 se rapporte au polymère réduit qui est de couleur orange. La courbe 13 se rapporte au polymère oxydé qui est bleu-violet. Les courbes 12 et 13 présentent un maximum respectivement pour $\lambda = 510$ nm et $\lambda = 670$ nm. Pour $\lambda = 510$ nm, la différence de densité optique $\Delta D$ entre les courbes 12 et 13 est $\Delta D = 0{,}8$, pour $\lambda = 670$ nm, $\Delta D = 0{,}45$ et pour $\lambda = 850$ nm, $\Delta D = 0{,}4$.

La figure 4 représente les spectres d'absorption pour le polymère de l'exemple 2 avec $X^- = BF_4^-$. C'est un diagramme qui représente l'allure de la densité optique D en fonction de la longueur d'onde λ de la lumière. La courbe 14 se rapporte au polymère réduit qui est de couleur rouge orangé. La courbe 15 se rapporte au polymère oxydé qui est de couleur bleu-vert. Les courbes 14 et 15 présentent un maximum respectivement pour $\lambda = 510$ nm et $\lambda = 670$ nm. Pour $\lambda = 510$ nm, la différence de densité optique $\Delta D$ entre les courbes 14 et 15 est $\Delta D = 0{,}7$, pour $\lambda = 670$ nm on a $\Delta D = 0{,}43$ et pour $\lambda = 850$ nm, $\Delta D = 0{,}25$.

Le tableau ci-dessous met en relief les effets de différents contre-ions intervenant dans la structure du poly méthyl-3-thiophène:

| Nature du contre-ion $X^-$ | Forme oxydée | Forme réduite |
|---|---|---|
| $ClO_4^-$ | bleu foncé | rouge |
| $PF_6^-$ | bleu violet | orange |
| $BF_4^-$ | bleu vert | rouge orangé |

Exemple 3

Cet exemple montre l'influence du monomère de base dans le spectre d'absorption du polymère. Le monomère des exemples 1 et 2 est remplacé par le 5-cyanoindole de formule:

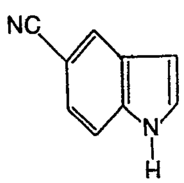

La synthèse du polymère est effectuée de la même façon que celle du méthyl-3-thiophène avec une différence de potentiel de 1,4 V entre l'anode et l'électrode de référence. Au bout d'une minute, on obtient sur l'anode un film de polymère de 1000 Å d'épaisseur dans lequel est incorporé l'ion $ClO_4^-$ provenant de l'électrolyte utilisé (perchlorate de lithium). L'électrode supportant le film de poly 5-cyanoindole est rincée dans l'acétonitrile. Cette électrode peut alors être utilisée dans une cellule électrochromique du type représenté à la figure 1. Cette cellule est remplie d'une solution contenant 0,1 mole de perchlorate de lithium pour 1 l d'acétonitrile. Le film est réduit puis réoxydé si l'on applique entre l'électrode de travail et l'électrode de référence une tension d'abord égale à 1 V puis égale à 0,17 V. La couleur du film passe alors du vert (forme oxydée) à une couleur blanchâtre (forme réduite). Les quantités de charges mises en jeu sont 3,5 mC/cm² lors de l'oxydation et 3,5 mC/cm² lors de la réduction.

La figure 5 représente les spectres d'absorption pour le polymère de l'exemple 3 avec $X^- = ClO_4^-$. C'est un diagramme qui représente l'allure de la densité optique D en fonction de la longueur d'onde λ de la lumière. La courbe 16 se rapporte au polymère réduit qui est de couleur blanchâtre. La courbe 17 se rapporte au polymère oxydé qui est de couleur verte. Les courbes 16 et 17 présentent un maximum respectivement pour $\lambda = 350$ nm et $\lambda = 750$ nm. Pour $\lambda = 350$ nm, la différence de densité optique entre les courbes 16 et 17 est $\Delta D = 0{,}2$, pour $\lambda = 750$ nm, on a aussi $\Delta D = 0{,}2$.

## Revendications

1. Electrode comprenant un support conducteur (3) recouvert d'un film (4) de polymère obtenu par polymérisation électrochimique d'au moins un monomère M, ledit polymère répondant à la formule générale $(M^+X\bar{y})n$; $X^-$ représentant un anion provenant de l'électrolyte utilisé au cours de ladite polymérisation, y la proportion en anion rapportée à une mole de monomère et n le degré de polymérisation, caractérisé en ce que ledit monomère possède au moins un hétérocycle aromatique à 5 chaînons contenant un seul hétéro-atome et qu'il est substitué par au moins un groupement de type alkyle, alkoxyle, hydroxyle, aryle, aryle substitué, halogène, trihalogénométhyle, cyano, amino ou dialkylamino, ledit monomère étant:

– soit:

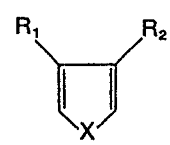

avec

X = S ou O,

$R_1$ et $R_2$ étant soit l'hydrogène, soit l'un desdits groupements,

– soit un indole substitué sur le noyau phényle par au moins l'un des groupements $R_3$, $R_4$, $R_5$ et $R_6$, de formule générale:

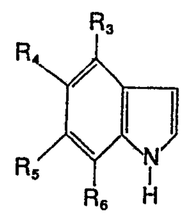

$R_3$, $R_4$, $R_5$ et $R_6$ étant soit l'hydrogène, soit l'un desdits groupements.

2. Electrode selon la revendication 1, caractérisée en ce que ledit électrolyte est un sel conducteur du type $A^+X^-$ où le cation $A^+$ est un élément

alcalin, l'ion $N(C4H_9)_4^+$ ou l'ion $N(C_2H_5)_4^+$ et où l'anion $X^-$ est un ion tel que $ClO_4^-$, $BF_4^-$, $PF_6^-$, $I^-$, $Br^-$ ou:

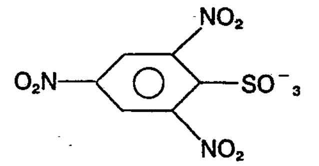

3. Electrode selon l'une des revendications 1 ou 2, caractérisée en ce que ledit électrolyte utilisé au cours de ladite polymérisation est en solution dans un solvant organique tel que l'acétonitrile, le tétrahydrofuranne ou le chlorure de méthylène.

4. Electrode selon l'une quelconque des revendications 1 à 3, caractérisée en ce que ledit support conducteur est une plaque métallique.

5. Electrode selon la revendication 4, caractérisée en ce que ladite plaque métallique est en platine.

6. Electrode selon l'une quelconque des revendications 1 à 3, caractérisée en ce que ledit support conducteur est formé par une lame non conductrice recouverte d'une couche conductrice.

7. Electrode selon la revendication 6, caractérisée en ce que ledit support conducteur est transparent.

8. Electrode selon l'une quelconque des revendications 1 à 7, caractérisée en ce que le polymère est obtenu à partir de deux ou de plusieurs monomères.

9. Cellule électrochimique, caractérisée en ce que l'une des électrodes est constituée par une électrode obtenue selon l'une des revendications 1 à 8.

10. Cellule électrochimique selon la revendication 9, caractérisée en ce qu'elle sert à l'accumulation et à la restitution d'énergie par un phénomène d'oxydo-réduction.

11. Dispositif d'affichage électrochromique, caractérisé en ce qu'il utilise une cellule électrochimique selon la revendication 9.

12. Dispositif d'affichage selon la revendication 11, caractérisé en ce que la couleur dudit affichage peut être modifiée en changeant la nature de l'électrolyte dudit dispositif.

## Claims

1. An electrode comprising a conducting support (3) coated with a polymer film (4) obtained by electrochemical polymerization of at least one monomer M, said polymer corresponding to the general formula $(M^+X\bar{y})n$; $X^-$ representing an anion coming from the electrolyte used during said polymerization, y representing the anion proportion with respect to a mole of monomer and n the degree of polymerization, characterized in that said monomer has at least one aromatic heterocycle with 5 links containing a single hetero-atom and is substituted by at least one group of the alkyl, alkoxyl, hydroxyl, aryl, substituted aryl, halogen, trihalogenmethyl, cyano, amino or dialkylamino type, said monomer either corresponding to the chemical formula:

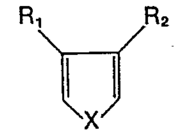

with

X = S or O,

$R_1$ and $R_2$ being either hydrogen, or one of said groups, or being an indole substituted on the phenyl nucleus by at least one of the groups $R_3$, $R_4$, $R_5$, and $R_6$ of the general formula:

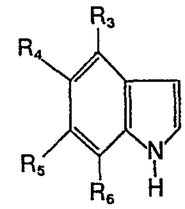

$R_3$, $R_4$, $R_5$ and $R_6$ being either hydrogen or one of said groups.

2. An electrode as claimed in claim 1, characterized in that said electrolyte is a conducting salt of the $A^+X^-$ type in which the cation $A^+$ is an alkaline element, the $N(C_4H_9)_4^+$ ion or the $N(C_2H_5)_4^+$ ion and in which the anion $X^-$ is an anion such as $ClO_4^-$, $BF_4^-$, $PF_6^-$, $I^-$, $Br^-$ or:

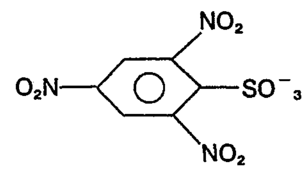

3. An electrode as claimed in claim 1 or 2, characterized in that said electrolyte used during said polymerization is in solution in an organic solvent such as acetonitrile, tetrahydrofuran or methylene chloride.

4. An electrode as claimed in any one of claims 1 to 3, characterized in that said conducting support is a metal plate.

5. An electrode as claimed in claim 4, characterized in that said metal plate is made from platinum.

6. An electrode as claimed in any one of claims 1 to 3, characterized in that said conducting support is formed by a non conducting wafer coated with a conducting layer.

7. An electrode as claimed in claim 6, characterized in that said conducting support is transparent.

8. An electrode as claimed in any one of claims 1 to 7, characterized in that the polymer is obtained from two or more monomers.

9. An electrochemical cell, characterized in that one of the electrodes is formed by an electrode obtained in accordance with one of claims 1 to 8.

10. An electrochemical cell as claimed in claim 9, serving for accumulating and restoring energy by an oxido-reduction phenomenon.

11. An electrochemical display device, characterized in that it uses an electrochemical cell such as claimed in claim 9.

12. A display device such as claimed in claim 11, characterized in that the color of said display may be modified by changing the nature of the electrolyte of said device.

**Patentansprüche**

1. Elektrode mit einem leitenden Träger (3), der von einem Film (4) aus einem durch elektrochemische Polymerisation mindestens eines Monomers M erhaltenen Polymer bedeckt ist und gemäss der allgemeinen Formel $(M^+X\bar{y})n$ aufgebaut ist, wobei $X^-$ ein Anion aus dem während der Polymerisation verwendeten Elektrolyten, y das auf ein Mol Monomer bezogene Anionenverhältnis und n den Polymerisationsgrad darstellen, dadurch gekennzeichnet, dass das Monomer mindestens einen aromatischen fünfgliedrigen Heterozyklus mit einem einzigen Heteroatom besitzt und dass es durch mindestens eine Gruppierung des Alkyl-, Alkoxyl-, Hydroxyl-, Aryl-, Arylsubstitut-, Halogen-, Trihalogenmethyl-, Zyan-, Amino- oder Dialkylaminotyps substituiert ist, wobei das Monomer entweder folgende Struktur aufweist:

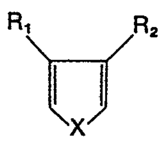

mit X = S oder O,
wobei $R_1$ und $R_2$ entweder Wasserstoff oder eine der Gruppierungen ist,
oder ein auf dem Phenylkern durch mindestens eine der Gruppierungen $R_3$, $R_4$, $R_5$, $R_6$ substituiertes Indol der folgenden allgemeinen Formel ist:

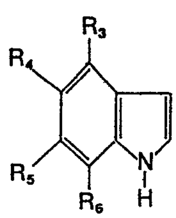

wobei $R_3$, $R_4$, $R_5$ und $R_6$ entweder Wasserstoff oder eine der Gruppierungen ist.

2. Elektrode nach Anspruch 1, dadurch gekennzeichnet, dass der Elektrolyt ein leitendes Salz vom Typ $A^+X^-$ ist, wobei das Kation $A^+$ ein Alkalielement, das Ion $N(C_4H_9)_4^+$ oder das Ion $N(C_2H_5)_4^+$ ist, und das Anion $X^-$ ein Ion wie z.B. $ClO_4^-$, $BF_4^-$, $PF_6^-$, $I^-$, $Br^-$ oder

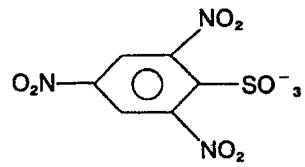

ist.

3. Elektrode nach einem der Ansprüche 1 oder 2, dadurch gekennzeichnet, dass der während der Polymerisation verwendete Elektrolyt in Lösung in einem organischen Lösungsmittel wie z.B. Acetonitril, Tetrahydrofuran oder Methylenchlorid vorliegt.

4. Elektrode nach einem beliebigen der Ansprüche 1 bis 3, dadurch gekennzeichnet, dass der leitende Träger eine Metallplatte ist.

5. Elektrode nach Anspruch 4, dadurch gekennzeichnet, dass die Metallplatte aus Platin ist.

6. Elektrode nach einem beliebigen der Ansprüche 1 bis 3, dadurch gekennzeichnet, dass der leitende Träger von einer nicht leitenden Lamelle gebildet wird, die mit einer leitfähigen Schicht bedeckt ist.

7. Elektrode nach Anspruch 6, dadurch gekennzeichnet, dass der leitende Träger lichtdurchlässig ist.

8. Elektrode nach einem beliebigen der Ansprüche 1 bis 7, dadurch gekennzeichnet, dass das Polymer aus zwei oder mehr Monomeren erhalten wird.

9. Elektrochemische Zelle, dadurch gekennzeichnet, dass eine der Elektroden von einer gemäss einem der Ansprüche 1 bis 8 erhaltenen Elektrode gebildet wird.

10. Elektrochemische Zelle nach Anspruch 9, dadurch gekennzeichnet, dass sie zur Speicherung und Wiedergabe von Energie aufgrund eines Oxydoreduktionsvorgangs dient.

11. Vorrichtung zur elektrochromen Anzeige, dadurch gekennzeichnet, dass sie eine elektrochemische Zelle nach Anspruch 9 verwendet.

12. Vorrichtung zur Anzeige nach Anspruch 11, dadurch gekennzeichnet, dass die Farbe der Anzeige durch Veränderung der Natur des Elektrolyten der Vorrichtung verändert werden kann.

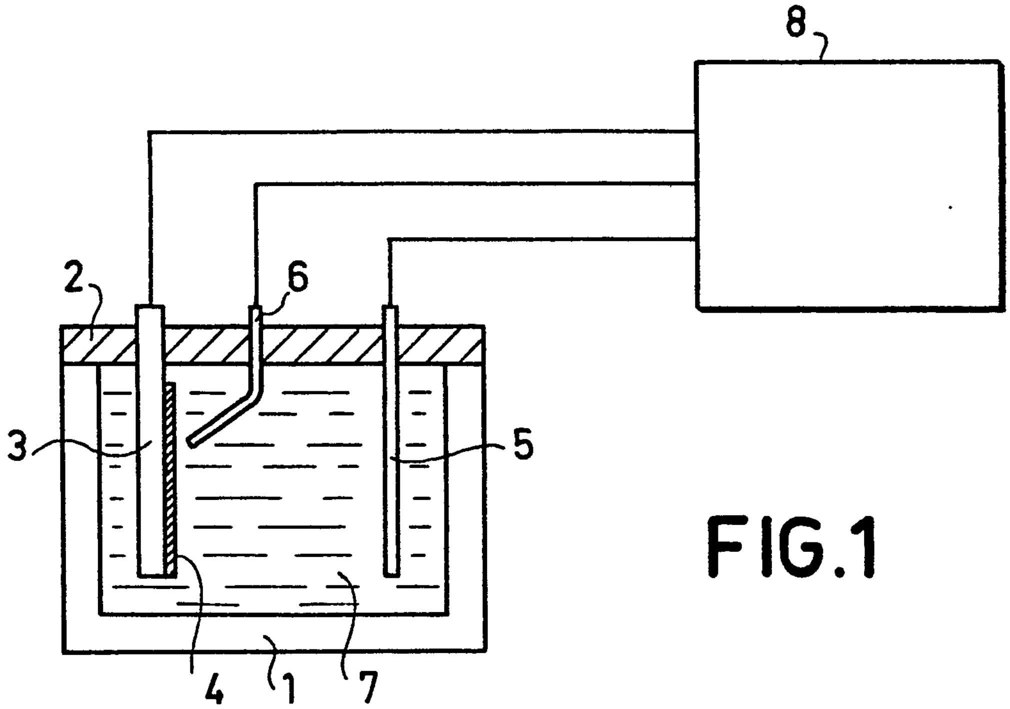


FIG.1

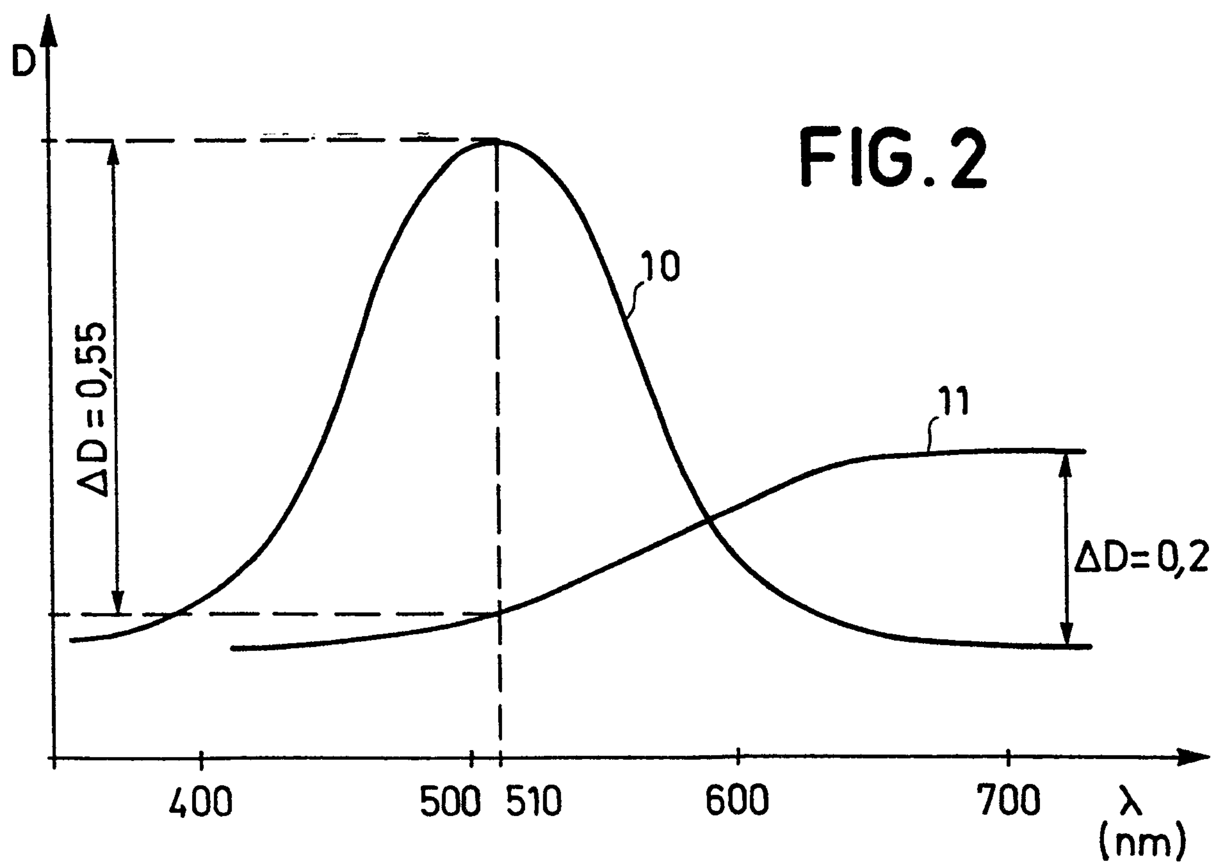


FIG.2

FIG. 3

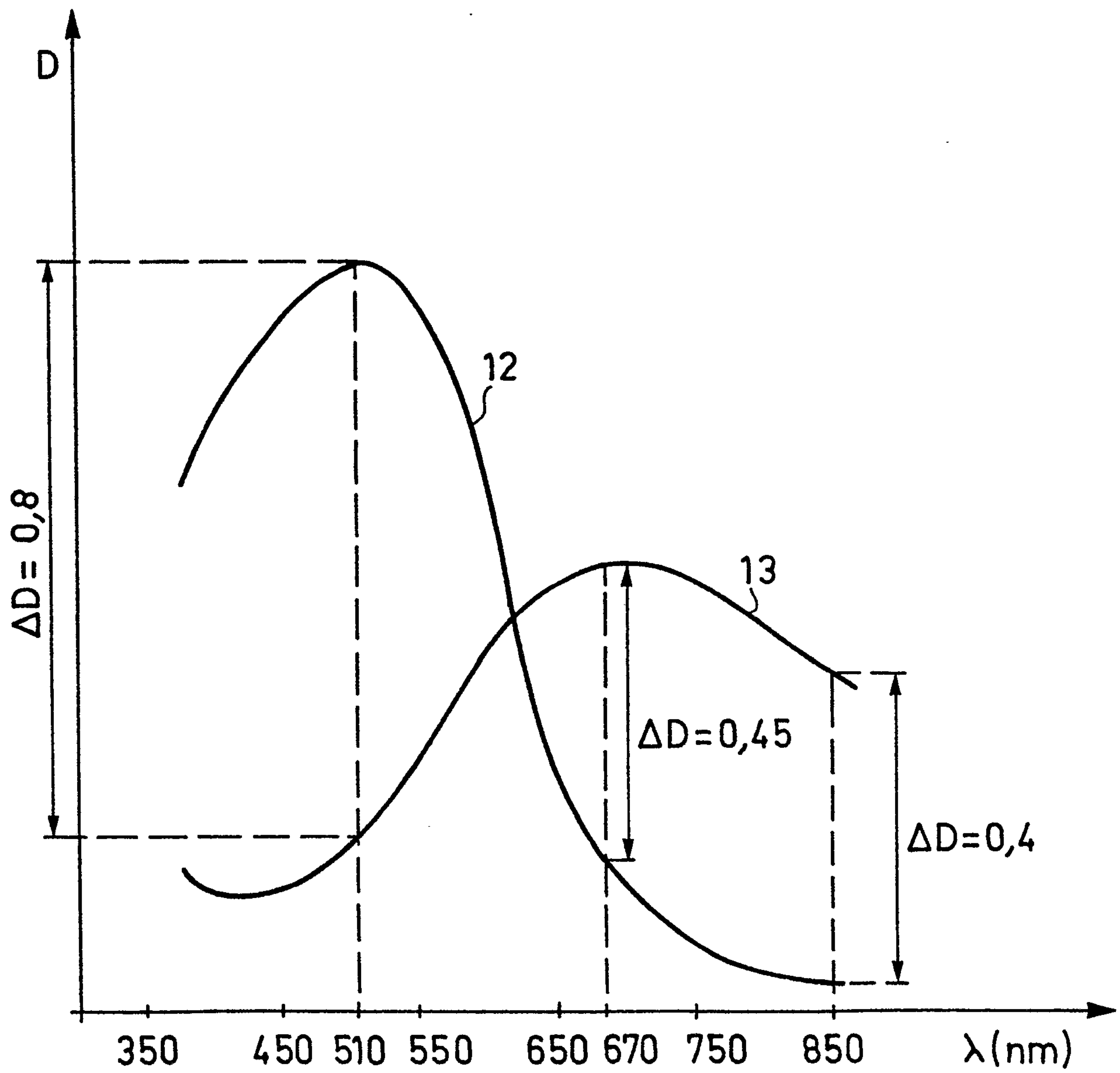

FIG. 4

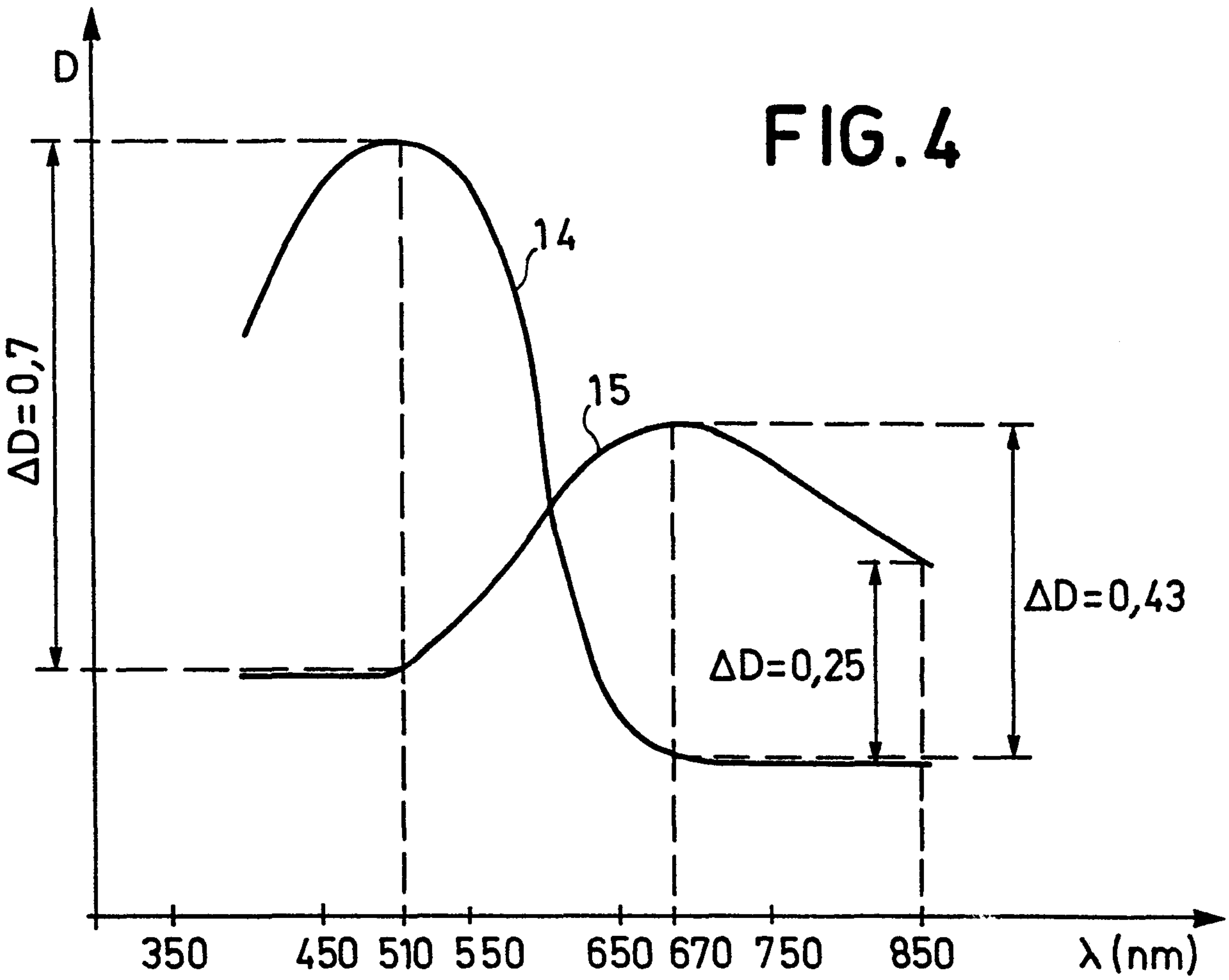
D
ΔD=0,7
14
15
ΔD=0,43
ΔD=0,25
350
450
510
550
650
670
750
850
λ (nm)

FIG. 5

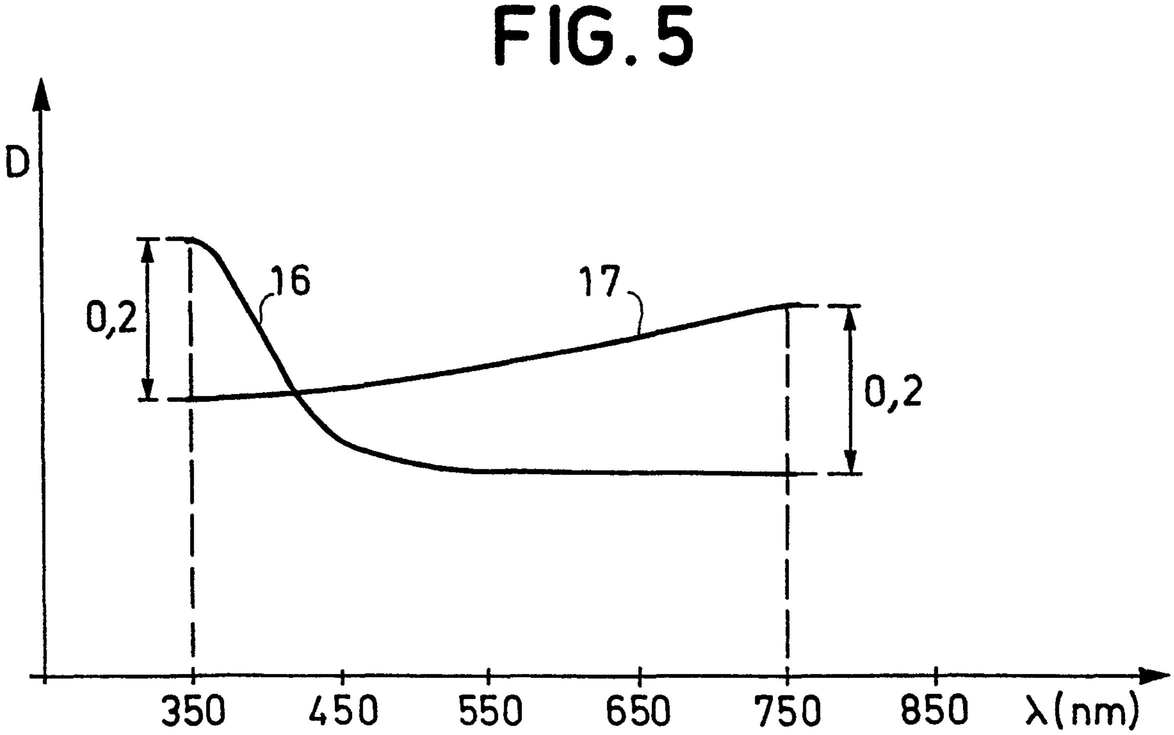
D
0,2
16
17
0,2
350
450
550
650
750
850
λ (nm)